# EUROPÄISCHE PATENTSCHRIFT

(11) **EP 3 126 190 B1**
(45) Veröffentlichungstag und Bekanntmachung des Hinweises auf die Patenterteilung: **14.02.2018**
(21) Anmeldenummer: 14827751.0
(22) Anmeldetag: 19.12.2014
(51) Int. Cl.: B60P 1/02, B62D 53/00, B60P 1/43

(54) **TRAILERZUGANHÄNGER MIT TRAGGESTELL FÜR EINEN TRANSPORTGUTWAGEN**
TRAILER-TRAIN TRAILER HAVING A CARRYING FRAME FOR A TRANSPORT-MATERIAL CART
REMORQUE DE TRAIN DE REMORQUES AVEC BÂTI DE SUPPORT POUR CHARIOT DE PRODUITS À TRANSPORTER

(30) Priorität: 31.03.2014 DE 202014101510 U
(43) Veröffentlichungstag der Anmeldung: 08.02.2017
(73) Patentinhaber: LR Intralogistik GmbH, 84109 Wörth a. d. Isar (DE)
(72) Erfinder: BERGHAMMER, Fritz, 84036 Landshut (DE)
(74) Vertreter: Patentship Patentanwaltsgesellschaft mbH
(86) Internationale Anmeldenummer: PCT/EP2014/078772
(87) Internationale Veröffentlichungsnummer: WO 2015/149892

(56) Entgegenhaltungen:
- DE-A1-102011 100 145
- DE-U1- 20 200 619
- GB-A- 2 310 834
- US-B1- 6 733 219

## Beschreibung

Die Erfindung betrifft einen Trailerzuganhänger mit einem Traggestell für die Aufnahme mindestens eines in einem Trailerzug mitgeführten Transportgutwagens (Trolley) nach dem Oberbegriff des Anspruchs 1.

Die US 6 733 219 B1 offenbart einen Anhänger, auf den Geländefahrzeuge, beispielsweise ein Quad, aufgeladen werden können. Der Anhänger weist ein von einer Ladefläche gebildetes Traggestell auf, das ein mittig angeordnetes Fahrwerk mit einer Achse und zwei seitlich an der Achse gelagerten Rädern hat. Die Ladefläche ist an einer Anhängedeichsel um eine Querachse gelenkig gelagert. Dadurch kann die Ladefläche um die mit den Rädern versehene Achse nach hinten gekippt werden, so dass das zu transportierende Geländefahrzeug von der Hinterseite des Anhängers auf die Ladefläche 1 aufgefahren werden kann.

Aus der GB 2 310 834 A ist einen Anhänger zum Transport von Fahrrädern bekannt, bei dem an einem Längsholm des Anhängers seitlich abstehende Tragarme angeordnet sind, die an den Enden mit wiegenförmigen Halteelementen versehen sind, die derart gestaltet sind, dass die Wiegen einen Reifen des zu transportierenden Fahrrades klemmen und einkeilen, um das Fahrrad vertikal zu halten.

Gegenstand der EP 1 986 883 B1 ist eine Handhabungsvorrichtung mit den Merkmalen des Oberbegriffs des Anspruches 1. Diese dient dazu, eine Last, beispielsweise einen Trolley seitlich auf einen Trailerzuganhänger zu ziehen. Der Trolley kommt zu Beginn der Ladebewegung mittels bogenförmiger Kufen in den Bereich von zwei parallelen Ketten, auf denen sich die Kufen während des Aufziehens auf den Trailerzuganhänger abstützen. Die Ketten, die einen trapezförmigen Verlauf haben, müssen dabei die gesamte Last des Transportgutwagens aufnehmen. Um sicherzustellen, dass die Lenk- und Bockrollen des Trolleys in dessen aufgesattelter Stellung keinen Bodenkontakt mehr haben, muss der Trolley über das ansteigende Zugtrum sehr hoch angehoben werden, damit auch die beiden Deichseln des Anhängers überfahren werden können.

Aus DE 20 2013 102 199.7 der Anmelderin ist ein Trailerzuganhänger mit einem in Draufsicht E-förmigen Tragrahmen bekannt, an dessen Mittelträger eine die Last erfassende Greifeinheit in Form einer umlaufenden Kette angeordnet ist. Die beiden Ketten sind dort in einem Gehäuse gelagert, das relativ zu dem Mittelträger teleskopisch ausgefahren werden kann, um den Trolley zu erfassen und in den Tragrahmen hineinzuziehen.

Der Erfindung liegt die Aufgabe zugrunde, einen Trailerzuganhänger mit Traggestell für einen Trolley zur Verfügung zu stellen, bei dem die Mittel zur Aufnahme des Transportgutwagens durch eine Einrichtung unterstützt werden, die in jeder Stellung des

Trolleys für eine Gewichtsentlastung sorgt. Die Lösung dieser Aufgabe ergibt sich aus den kennzeichnenden Merkmalen des Anspruchs 1.

Die beiden Rampen, die in Längsrichtung des Trailerzuganhängers dessen Traggestell nach vom und hinten verlängern, nehmen in jeder Stellung des Trolleys beim Aufschieben, während des Transports im Trailerzug und beim Entladen des Trolleys dessen gesamte Last auf, da sich die Lenk- und/oder Bockrollen auf den beiden Rampen abstützen.

In Weiterbildung der Erfindung stehen die bogenförmigen Rampen von jeweils einer Seitenwand eines das Fahrwerk überdeckenden, nach unten offenen Gehäuses ab, das eine die beiden parallelen Seitenwände verbindendes Dach hat, wobei zwischen dem Dach und der Achse des Fahrwerks eine Hubeinrichtung zur Höhenverstellung des Traggestells angeordnet ist.

Die Hubeinrichtung sorgt dafür, dass für den Transport im Trailerzug die beiden Rampen über den Boden angehoben werden; beim Beladen und Abladen des Trolleys senkt die Hubeinrichtung das Gehäuse mit den beiden Rampen wieder bis zum Bodenkontakt ab, so dass der jeweilige Transportgutwagen leicht eingefahren oder abgegeben werden kann. Dies ist ohne Mühe möglich, so dass das Be- und Entladen von Hand durchgeführt werden kann.

Es ist von besonderem Vorteil, wenn an den beiden freien Enden des Gehäuses quer zur Fahrtrichtung höhenverstellbare Mittel zur Verriegelung des Transportgutwagens angeordnet sind, die diesen in der aufgesattelten Form auf dem Traggestell sichern und als Endanschlag beim Aufschieben dienen.

Die Mittel zur Verriegelung an jedem der beiden seitlichen Enden des Gehäuses können aus zwei um feste Drehachsen schwenkbaren Sperrklinken bestehen, die an dem seitlichen Ende in Fahrtrichtung einander gegenüberliegen, wobei auf der Drehachse neben einer der beiden Sperrklinken eine dazu parallele Schaltklinke relativ zu der Sperrklinke längsverschieblich gelagert und über eine Zugstange mit der am anderen Ende gegenüberliegenden Sperrklinke in Wirkverbindung ist.

Nach einem anderen Merkmal der Erfindung ist vorgesehen, dass den Mitteln zum Aufziehen des Trolleys jeweils eine Greifeinheit mit umlaufender Kette zugeordnet ist, um ein manuelles Aufschieben des Trolleys entbehrlich zu machen.

Vorteilhafte Weiterbildungen der Erfindung sind Gegenstand der abhängigen Ansprüche.

Die Erfindung ist nachstehend an Ausführungsbeispielen erläutert, die in der Zeichnung dargestellt sind. Es zeigen:
Figur 1 die perspektivische Ansicht von schräg oben eines Trailerzuganhängers zu Beginn des Beladens mit einem Trolley,
Figur 2 eine der Figur 1 entsprechende Darstellung beim manuellen Einschieben des Trolleys,
Figur 3 den Trolley beim Einschieben in Richtung auf die Mittellage,
Figur 4 den Trailerzuganhänger mit aufgesatteltem Trolley in dessen Mittellage,
Figur 5 den Trolley beim Herausziehen aus dem Trailerzuganhänger,
Figur 6 den Trailerzuganhänger nach dem Ausziehen des Trolleys,
Figuren 7 bis 14 Seitenansichten des Trailerzuganhängers beim Einschub und Ausschub des Trolleys von der anderen Seite,
Figur 15 eine Schnittansicht des Trailerzuganhängers in angehobener Stellung des Traggestells,
Figur 16 die Schnittdarstellung des Traggestells in abgesenkter Stellung,
Figur 17 die Ansicht einer Variante des Trailerzuganhänger mit Kettengreifeinheit beim Erfassen eines links davor stehenden Trolleys,
Figur 18 den Trailerzuganhänger der Figur 17 in der aufgesattelten Stellung des Trolleys,
Figuren 19 und 20 die Ausschubpositionen des Trolleys von links nach rechts,
Figuren 21 bis 24 Seitenansichten des Trailerzuganhänger in den Positionen der Figuren 17 bis 20, jedoch beim Einziehen von rechts nach links,
Figur 25 die perspektivische Ansicht der Verriegelungsmittel in geschlossener Stellung (Trolley aufgesattelt),
Figur 26 die Ausgangsstellung der Verriegelungsmittel,
Figur 27 die Verriegelungsmittel in auf der rechten Seite geöffneter Stellung und
Figuren 28 bis 30 die Ansicht der Verriegelungsmittel in den Stellungen der Figuren 25, 26 und 27.

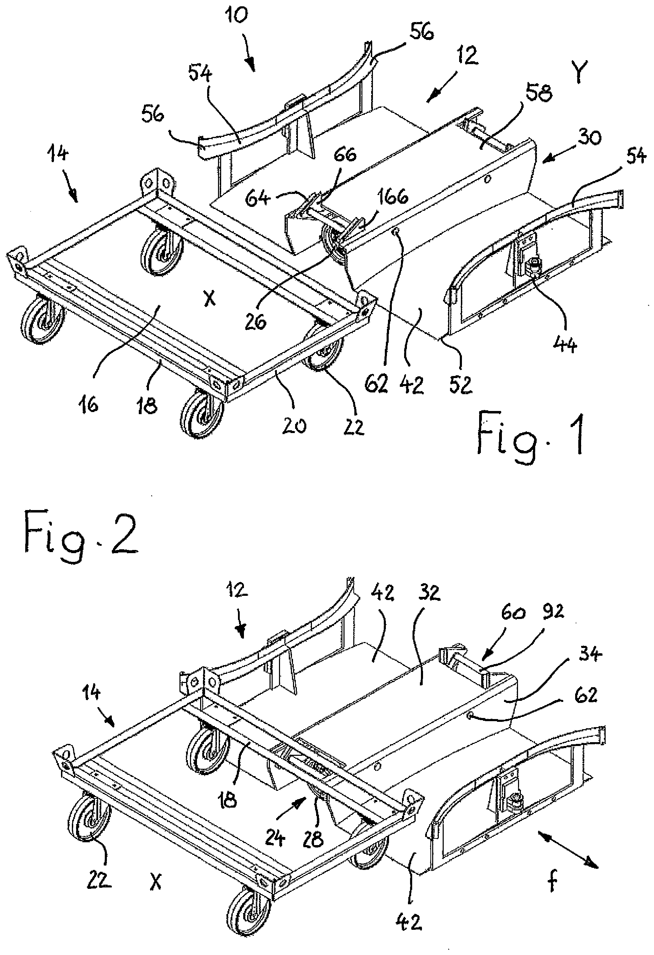

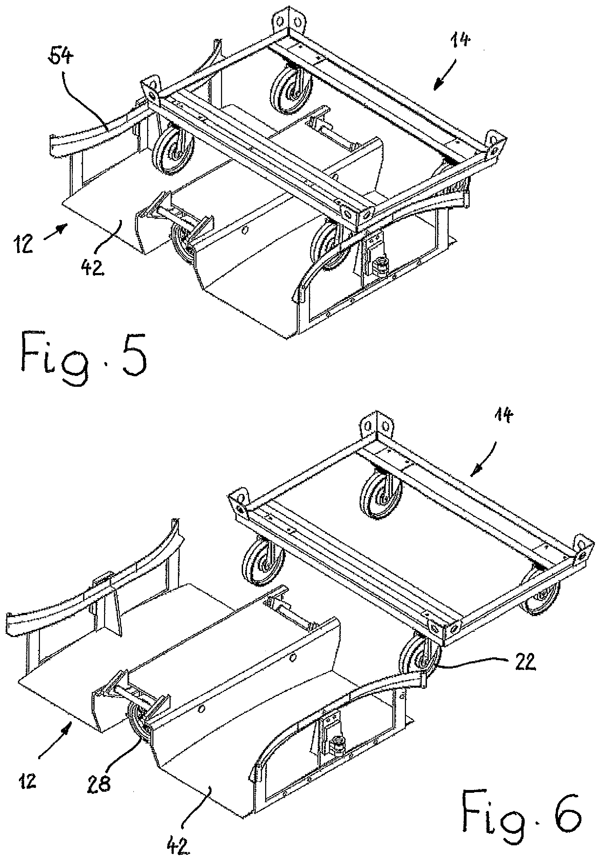

Die Figuren 1 bis 6 zeigen einen einachsigen Trailerzuganhänger 10 mit einem Traggestell 12 für die Aufnahme mindestens eines in einem Trailerzug mitgeführten Transportgutwagens oder Trolleys 14. Der Trolley 14 besteht aus einem rechteckigen Rahmen 16 mit zwei parallelen Längsholmen 18 und diese verbindenden Querholmen 20. Zum Verfahren des Trolleys 14 sind an den beiden Längsholmen 16 Lenk- und/oder Bockrollen 22 angebracht. Der Rahmen 16 dient zur Aufnahme von hier nicht dargestellten Lasten, beispielsweise Paletten oder Gitterboxen.

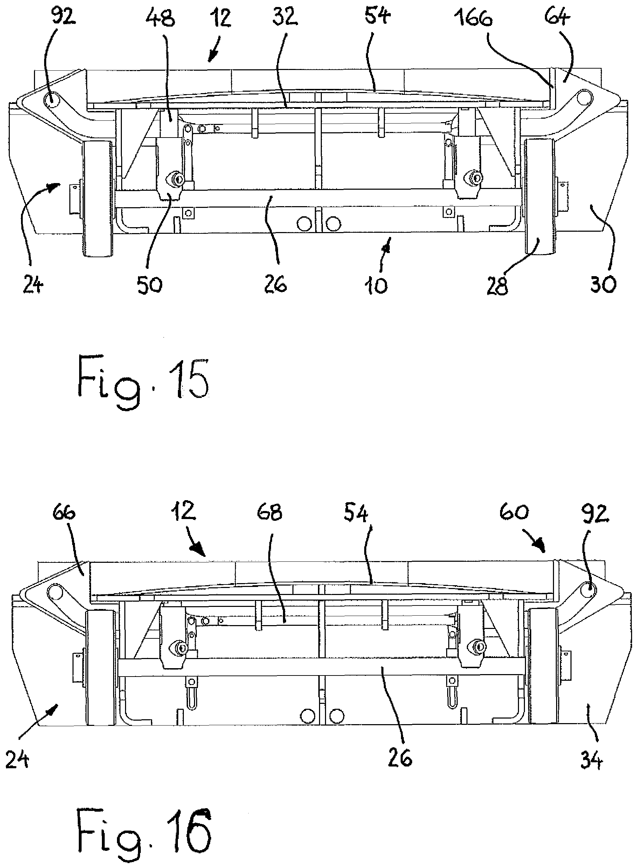

Das Traggestell 12 des Trailerzuganhängers 10 hat, wie aus EP 2 161 182 B1 bekannt, ein mittig angeordnetes Fahrwerk 24 mit einer quer zur Fahrtrichtung f angeordneten Achse 26, an deren beiden Enden je ein Rad 28 frei drehbar gelagert ist (s. auch Figuren 15 und 16). Das Fahrwerk 24 wird von einem nach unten offenen Gehäuse 30 überdeckt, das ein entsprechend der Achse 26 quer zur Fahrtrichtung f angeordnetes, flaches Dach 32 hat, von dessen beiden parallel zur Achse 26 verlaufenden Längsseiten jeweils eine Seitenwand 34 nach unten absteht.

Gemäß der Erfindung ist an dem Traggestell 12 in Fahrtrichtung f vor und hinter dem Fahrwerk 24 am unteren Rand der jeweiligen Seitenwand 34 des Gehäuses 30 eine Auffahr- und Ablauframpe 42 fest angebracht, die das Gehäuse 30 in Fahrtrichtung f nach vom bzw. hinten verlängert. Jede Rampe 42 hat in einer zur Achse 26 parallelen Ebene ein hier segmentbogenförmiges Querschnittsprofil, das ein manuelles Aufschieben des Trolleys 14 nach beiden Seiten mit geringem Kraftaufwand ermöglicht.

Am in Fahrtrichtung f vorderen und hinteren Ende der Rampen 42 ist jeweils ein Zugmaul 44 angebracht, das eine Koppelung des Trailerzuganhängers 10 mit einem weiteren Anhänger 10 oder einem Zugfahrzeug ermöglicht.

Jede Rampe 42 trägt an ihrem vom Fahrwerk 24 wegweisenden und zu diesem parallelen, freien Rand 52 eine Führungsschiene 54 nach Art eines Geländers, die mit der in Fahrtrichtung f gegenüberliegenden Führungsschiene 54 in Richtung auf ihr freies Ende 56 eine divergierende Öffnung bildet, wodurch eine Einführschräge gebildet wird, die ein gerichtetes Einschieben des Trolleys 14 quer zur Fahrtrichtung f erleichtert.

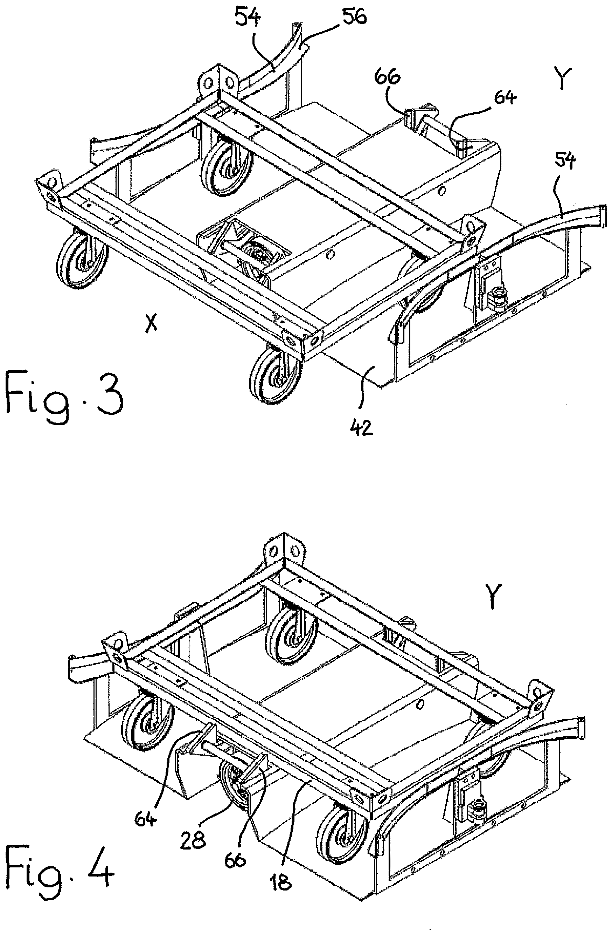

Wie die Figuren 15 und 16 zeigen, ist zwischen dem Dach 32 des Gehäuses 30 und der Achse 26 des Fahrwerks 24 eine aus EP 2 161 182 bekannte Hubeinrichtung 50 mit einer hydraulisch, pneumatisch oder elektrisch betriebenen Kolbenstange 48 angeordnet, die sich an der Unterseite des Dachs 32 abstützt. Mit Hilfe dieser Hubeinrichtung 50 kann das gesamte Traggestell 12 zusammen mit dem Trolley 14, dessen Rollen 22 auf den Rampen 42 stehen, über den Boden angehoben werden (vgl. Figuren 4, 11 und 15). In dieser angehobenen Stellung kann der Trailerzuganhänger 10 im Zugverbund verfahren werden.

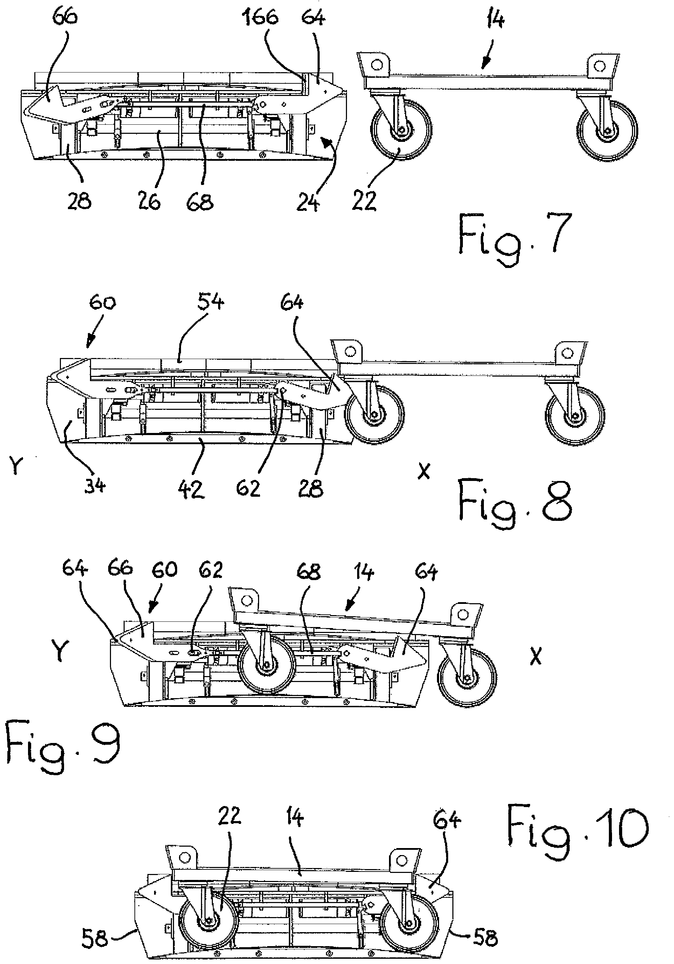

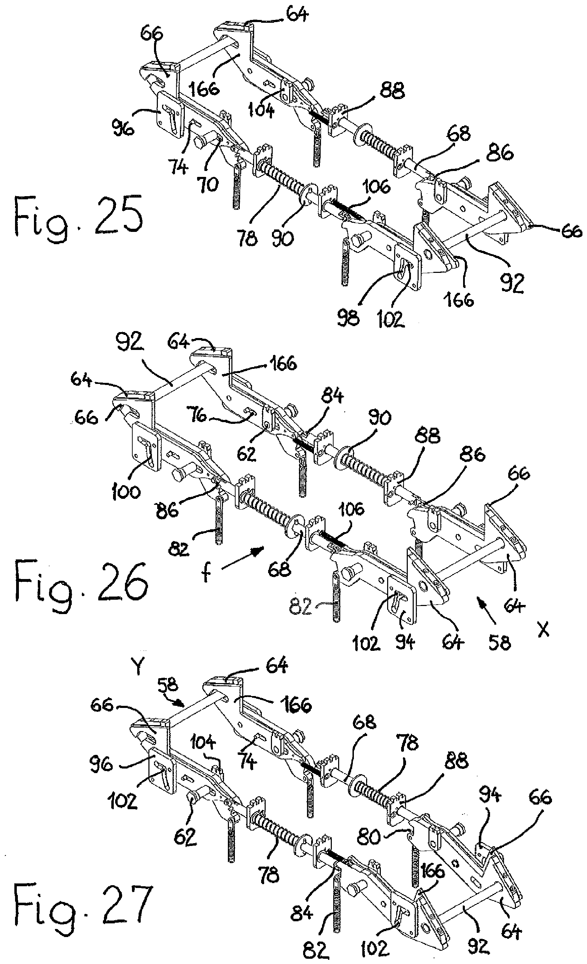

Im Bereich der beiden seitlichen Enden 58 des Gehäuses 30 sind quer zur Fahrtrichtung f verstellbare Mittel 60 zur Verriegelung des Trolleys 14 auf dem Traggestell 12 angeordnet. Diese bestehen gemäß den Figuren 7 bis 16 sowie 25 bis 30 aus um feste Drehachsen 62 schwenkbaren Sperrklinken 64 in Form von stabilen, dreieckigen Platten, die an den beiden seitlichen Ende 58 in Fahrtrichtung f paarweise gegenüberliegen. Die Drehachsen 62 verlaufen in Fahrtrichtung f und greifen in zugeordnete Lagerplatten 104 ein (Figuren 25 bis 27), die an der Unterseite des Daches 32 des Gehäuses 30 befestigt sind. Neben jeder Sperrklinke 64 ist mit gleicher Dreiecksform eine dazu parallele Schaltklinke 66 oder gegenüberliegend eine Riegelklinke 166 angeordnet. Da diese Klinken 66, 166 keine Last aufnehmen müssen, haben sie eine geringere Stärke als die Sperrklinken 64, an denen der Trolley 14 anschlägt. Jede Schaltklinke 66 und jede Riegelklinke 166 hat ein Langloch 70, das auf der festen Drehachse 62 der zugeordneten Sperrklinke 64 verschiebbar gelagert ist, sowie eine Langlochbohrung 76, in die ein von der Sperrklinke 64 abstehender Führungszapfen 74 eingreift. Auf diese Weise sind die Schaltklinken 66 und die Riegelklinken 166 relativ zu den zugeordneten, nur um die Achsen 62 drehbaren Sperrklinken 64 in deren Längsrichtung verschiebbar geführt.

Wie die Figuren 25 bis 27 zeigen, sind die beiden Schaltklinken 66 an der nach außen weisenden Seite der zugeordneten Sperrklinken 64 angeordnet und über eine Gelenkkoppel 86 mit einer Zugstange 68 verbunden, die sich quer zur Fahrtrichtung f erstreckt und in dem Gehäuse 30 angrenzend an jede Seitenwand 34 parallel zur Mittellängsachse des Gehäuses 30 angeordnet ist. Die beiden Zugstangen 68 sind in Bohrungen von jeweils zwei im Gehäuse 30 befestigten Halteplatten 88 längsverschieblich gegen die Kraft von Rückdruckfedern 78 gelagert, die als Schraubenfedern ausgebildet und auf die Zugstangen 68 aufgesetzt sind und die sich einerseits an den Halteplatten 88 und andererseits an einer Stützscheibe 90 abstützen, die fest mit der Zugstange 68 verbunden ist.

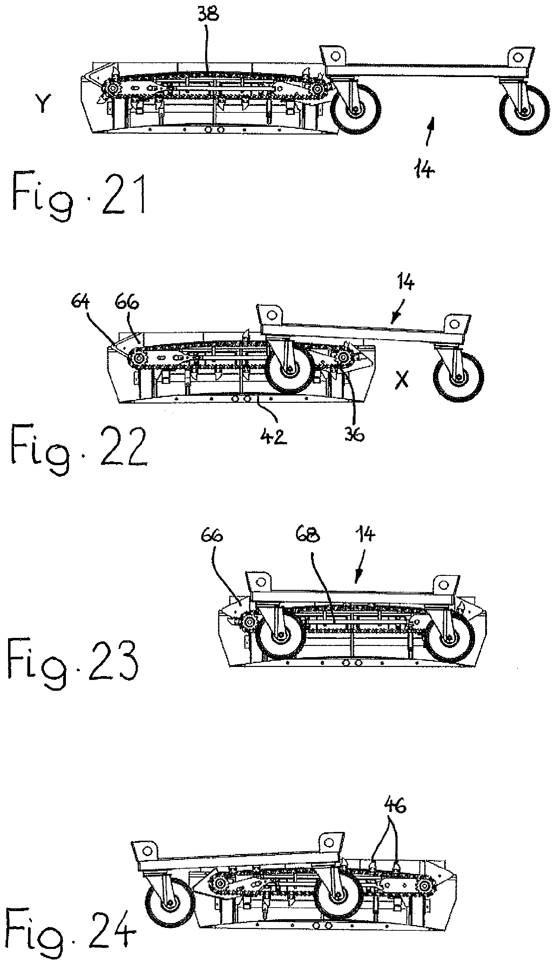

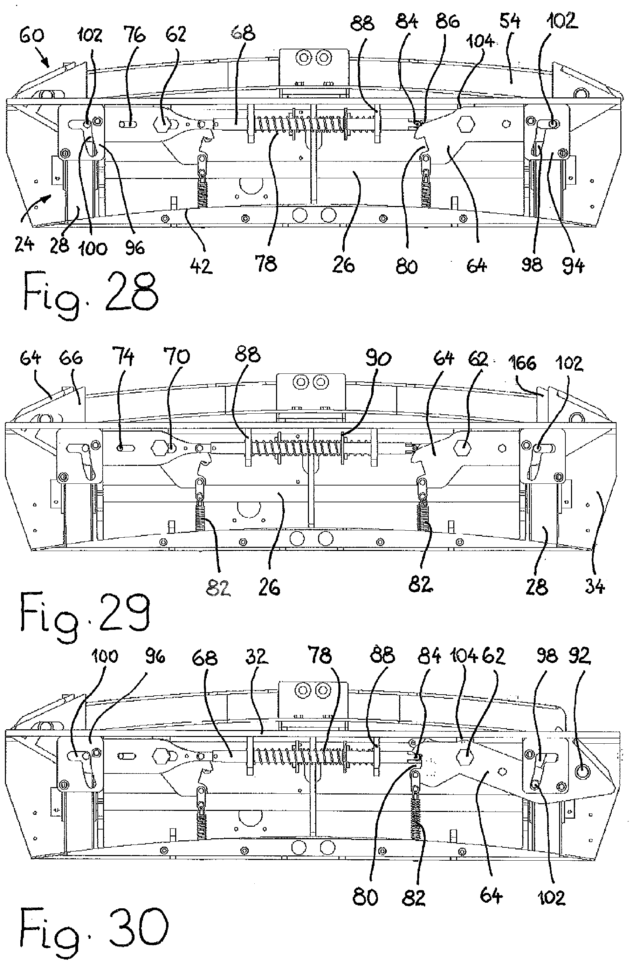

Das freie Ende 84 der Zugstange 68, das nicht über die Gelenkkoppel 86 mit der Schaltklinke 66 verbunden ist, dient dazu, in einen Rastsitz 80 der gegenüberliegenden Sperrklinke 64 einzugreifen, um diese in der abgeschwenkten Freigabestellung (Figuren 22 und 29) zu halten. Da jeweils eine Sperrklinke 64 in der vertikalen Ebene der gegenüberliegenden Schaltklinke 66 liegt, ist im Klinkenpaar am gegenüberliegenden seitlichen Ende 58 aufgrund der Überkreuzanordnung die Position Sperrklinke 64 und Schaltklinke 66 bzw. Riegelklinke 166 vertauscht. Die beiden diagonal zueinander angeordneten Schaltklinken 66 ziehen bei ihrer Längsverschiebung das freie Ende 84 der damit verbundenen Zugstange 68 aus dem Rastsitz 80 der gegenüberliegenden Sperrklinke 64 heraus, so dass die Klinken 64, 66 und 166 durch die Krafteinwirkung einer Zugfeder 82 in ihre Sperrstellung ausfahren können (Figuren 25, 26 sowie 28, 29)..

An der Innenseite jeder Seitenwand 34 des Gehäuses 30 sind zwei in den Figuren 25 bis 30 dargestellte Kulissenplatten 94, 96 mit winkelförmigen Führungsschlitzen 98 bzw. 100 angebracht, in die jeweils ein von der benachbarten Schaltklinke 66 bzw. Riegelklinke 166 abstehender Zapfen 102 eingreift. Jeder Führungsschlitz 98, 100 besteht aus einem nach unten gerichteten Abschnitt, der in einen horizontalen, zur Achse 26 parallelen Abschnitt übergeht, der zum seitlichen Ende 58 hin abgewinkelt ist, so dass er bei einer Horizontalverschiebung der Schaltklinke 66 in die Stellung der Figur 28 rechts eine Kippbewegung der Klinken 64, 66 um die Drehachse 62 nach unten verhindert, solange der Zapfen 102 in den horizontalen Abschnitt des Führungsschlitzes 98 bzw. 100 eingreift. Wie bereits erwähnt, ist jede Schaltklinke 66 bzw. Riegelklinke 166 mit der daneben angeordneten Sperrklinke 64 durch einen Führungszapfen 74 verbunden, der in der als Führungsschlitz wirkenden Langlochbohrung 76 der Klinke 66 bzw. 166 in Längsrichtung der Zugstange 68 beweglich ist, so dass beide Klinken 64, 66 bzw. 64, 166 bewegungsmäßig miteinander gekoppelt sind.

Die beiden Riegelklinken 166 sind parallel zu den beiden Schaltklinken 66 angeordnet und werden bei einer Schubbewegung durch den Trolley in die in Figur 28 gezeigte Sperrstellung gedrückt, in der der Zapfen 102 in den horizontalen Abschnitt des Führungsschlitzes 98 eingreift und auf dieser Seite X ein Abtauchen der Klinken 66, 166 und 64 verhindert. Die Riegelklinken 166 werden durch zwei Zugfedern 106 in ihre Ausgangsstellung (Figuren 26 und 29) gezogen, in der sie über die Sperrklinken 64 vorstehen und in der ihr Zapfen 102 in den horizontalen Abschnitt des Führungsschlitzes 98 eingreift. Damit kann aus dieser Ausgangsstellung auf beiden Seiten X und Y wechselseitig der Fußhebel 92 gedrückt oder ein Trolley 14 auf einer der beiden Seiten X, Y eingeschoben werden (vgl. Figuren 27 und 30)..

In der Situation der Figur 1 steht ein Trolley 14 neben dem Traggestell 12 des Trailerzuganhängers 10, wobei auf der hier linken Einfahrseite X die Sperrklinken 64 und die Schaltklinke 66 bzw. Riegelklinke 166 ausgefahren sind; auf der gegenüberliegenden Seite Y sind die Klinken 64, 66, 166 eingefahren, d. h. um die Drehachsen 62 nach unten gekippt, was der in den Figuren 27 und 30 gezeigten Lage entspricht.

Sobald gemäß den Figuren 2 und 8 der Längsholm 18 des Trolleys 14 die Klinken 64, 66, 166 auf der Einfahrseite X überfährt, werden diese niedergedrückt, was in der Ausgangsstellung der Figur 26 möglich ist, weil hier der Zapfen 102 in den vertikalen Abschnitt des Führungsschlitzes 98 nach unten "abtauchen" kann, wodurch gleichzeitig die Zugstange 68 die beiden auf der Seite Y gegenüberliegenden Klinkenpaare 64, 66 bzw. 166 aus der Freigabestellung der Figur 7 in die Sperrstellung der Figuren 8 und 9 ausfährt. Wenn dann in der Stellung der Figuren 4 und 10 der in Einfahrrichtung vordere Längsholm 18 des Trolleys 14 auf der gegenüberliegenden Seite Y gegen die beiden über die Sperrklinken 64 vorstehenden Klinken 66, 166 stößt, wird der Zapfen 102 in dem horizontalen Abschnitt des Führungsschlitzes 98 bzw. 100 verschoben, so dass er nicht in dessen vertikalen Abschnitt abtauchen kann. Die zur Einfahrseite X hin über die Sperrklinke 64 seitlich vorstehende Schaltklinke 66 zieht dabei die Zugstange 68 und mit dieser die Sperrklinke 64 auf der Einfahrseite X in ihre nach oben vorstehende Verriegelungsstellung (Figuren 25 und 26), so dass der Trolley 14, wie die Figuren 4 und 10 zeigen, auf dem Traggestell 12 in seiner Mittelposition gesichert ist.

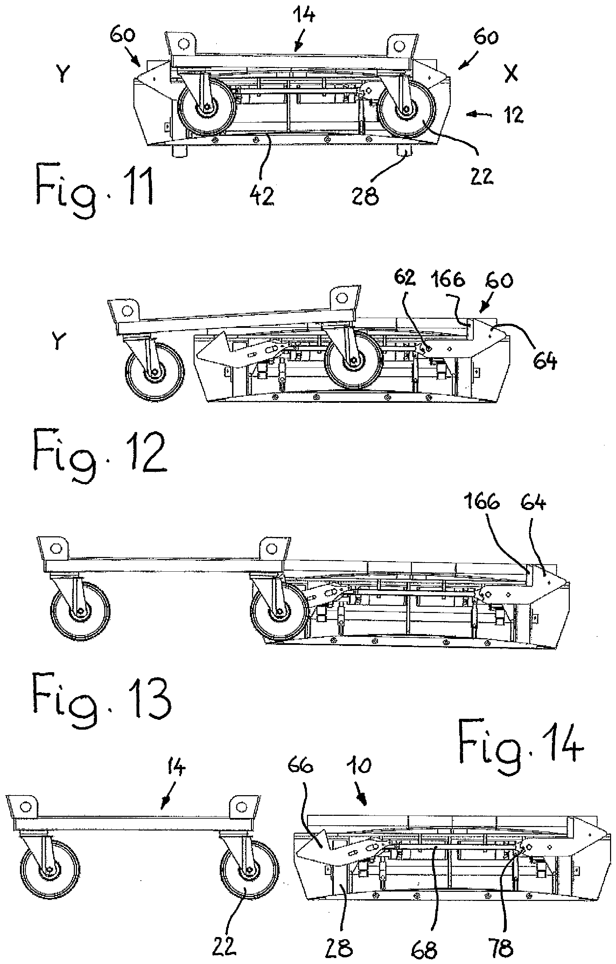

Um den Trolley 14 zum Entladen freizugeben, werden auf der gewählten Ausfahrseite Y mittels Betätigung des dort befindlichen Fußhebels 92 die entsprechenden Sperrklinken 64 und Schaltklinken 66 bzw. Riegelklinken 166 abgesenkt (vgl. Figur 12, linke Seite und Figur 24). Die gegenüberliegenden Klinken 64, 66, 166 bleiben dabei in ihrer ausgefahrenen Sperrstellung. In dieser Stellung rastet das freie Ende 84 der Zugstange 68 in den gegenüberliegenden Rastsitz 80 der Sperrklinke 64 ein und verriegelt diese in der um die Drehachse 62 nach unten gekippten, geöffneten Stellung (Figur 27).

In dieser Stellung kann, wie die Figuren 7 bis 10 zeigen, ein Trolley 14 eingeschoben werden, bis sein in Einschubrichtung vorderes Ende mit dem dort vorhandenen Längsholm 18 gegen die gegenüberliegende, über die Sperrklinke 64 vorstehende Schaltklinke 66 bzw. Riegelklinke 166 stößt. Dadurch wird das freie Ende 84 der Zugstange 68 auf der anderen Seite aus dem Sitz 80 herausgezogen (Figuren 25 und 26 sowie 28 und 29), so dass durch die Kraft der in die Sperrklinke 64 eingehängten Zugfeder 82 diese Sperrklinke 64 als auch die damit gekoppelte Klinke 66 bzw. 166 parallel zueinander in ihre Schließstellung nach oben schwenkt (Figuren 25 und 26 sowie 28 und 29). Damit ist der Trolley 14 für den Transport gesichert.

Damit der Trolley 14 nach der anderen Seite wieder herausgezogen werden kann (in Figur 12 zur Y-Seite), werden mittels des Fußhebels 92 auf dieser Seite die Klinken 66, 166 und 64 nach unten geschwenkt (analog Fig. 30 rechts), so dass auf dieser Seite die Rückdruckfeder 78 die Zugstange 68 mit ihrem freien Ende 84 in den Sitz 80 drückt und auf dieser Seite alle Klinken 64, 66, 166, die durch den Fußhebel 92 miteinander gekoppelt sind, während des Ausschiebens des Trolleys 14 in ihrer Öffnungsstellung bleiben. Die vier Klinken 64 und 66, 166 auf dieser Seite sorgen durch Einschnappen des freien Endes 84 der Zugstange 68 in ihren Sitz 80 dafür, dass alle Klinken 64, 66, 166 während des Ausschiebens des Trolleys 14 in ihrer Freigabestellung bleiben.

Wenn statt dessen die vier Klinken 64, 66, 166 auf der anderen Seite X in Lösestellung gebracht werden sollen, erfolgt die Betätigung nach Niederdrücken des Fußhebels 92 analog über die gegenüberliegende Zugstange 68.

Die Gelenkkoppel 86 zwischen der Zugstange 68 und der Schaltklinke 66 sorgt dafür, dass die Schwenkbewegung der Schaltklinke 66 in eine Linearbewegung der Zugstange 68 umgewandelt wird.

Aus der vorstehenden Beschreibung ergibt sich, dass durch die Anordnung der Verriegelungsmittel 60 an beiden seitlichen Enden 58 des Gehäuses 30 sichergestellt ist, dass die Sperrklinken 64 an wenigstens einem der beiden Enden 58 immer nach oben ausgeschwenkt sind, so dass der Trolley 14 am Ende seines Einfahrweges festgehalten und auch bei großem Einfahrschwung nicht über die Ausfahrrampe 42 herausrollen kann. Die Riegelklinken 166 haben dabei die Aufgabe, entsprechend der Stellung des Zapfens 106 ein Abtauchen der Sperrklinken 64 zu unterbinden bzw. zu ermöglichen.

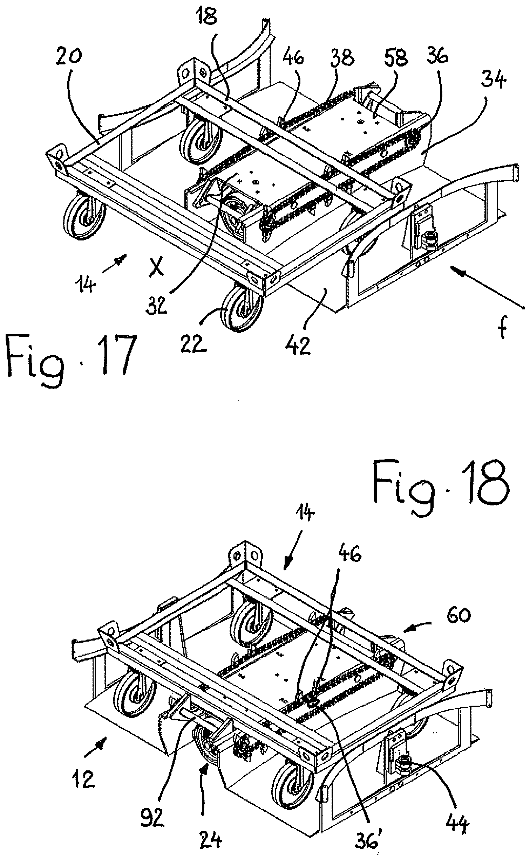

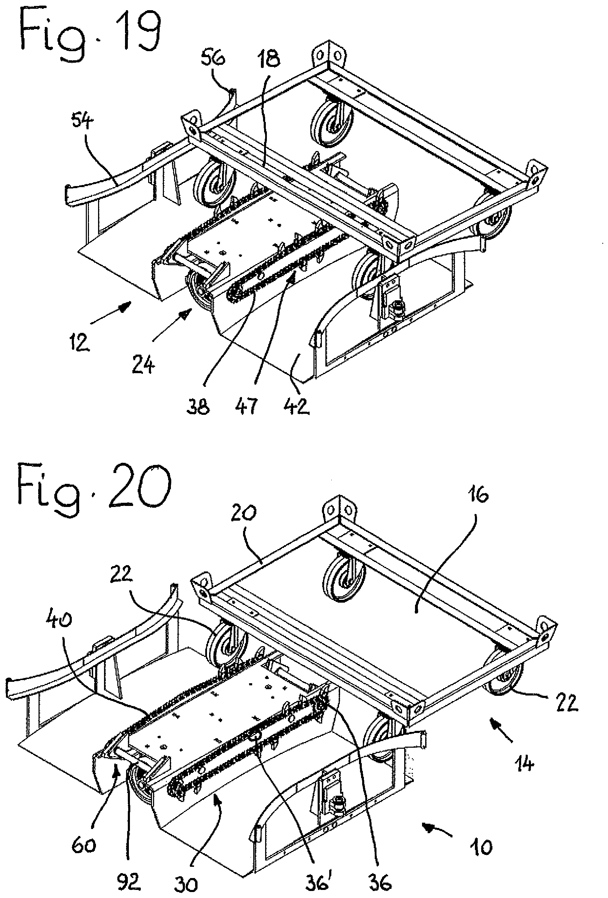

Im Ausführungsbeispiel der Figuren 17 bis 24 ist zur Unterstützung des Aufziehens des Trolleys 14 eine mit zwei parallelen Ketten 38 ausgerüstete Greifeinheit 47 vorgesehen. An jeder der beiden parallelen Seitenwänden 34 des Gehäuses 30 sind mit einem nicht dargestellten Motor verbundene Antriebs- bzw. Umlenkrollen 36 für eine umlaufende, geschlossene Kette 38 gelagert, wobei die jeweils mittlere Umlenkrolle 36' höher als die beiden äußeren Antriebs- bzw. Umlenkrollen 36 liegt. Auf diese Weise ergibt sich für das obere Zugtrum 40 der Kette 38 ein dachförmiger Verlauf, der der Bogenform der darunter angeordneten Rampe 42 entspricht.

Von jeder Kette 38 stehen Greiffinger 46 ab, die dazu dienen, beim Aufziehen des Trolleys 14 einen Längsholm 18 des Rahmens 16 zu erfassen (vgl. Figur 17). Da die Greiffinger 46 paarweise angeordnet sind, erfassen sie den Längsholm 18 von dessen beiden Seiten und sorgen damit für einen guten Halt auf den beiden parallelen, synchron angetriebenen Ketten 38.

Die Figuren 17 und 21 zeigen den Zustand eines Trailerzuganhängers 10 mit dem seitlich daneben stehenden Trolley 14, kurz bevor zwei der Greiffinger 46 der Kette 38 den Längsholm 18 des Trolleys 14 erfassen, um diesen dann gemäß Figur 18 und 22 mit den beiden in Verschieberichtung vorderen Rollen 22 auf die beiden segmentbogenförmigen Auffahrrampen 42 zu ziehen. In Figur 18 und 23 hat der Trolley 14 seine Mittellage erreicht, so dass anschließend gemäß Figur 15 das Traggestell 12 zusammen mit dem Trolley 14 mittels der Hubeinrichtung 50 angehoben werden kann. Wenn der Trailerzuganhänger 10 sein Ziel erreicht hat, wird gemäß Figur 16 das Traggestell 12 wieder abgesenkt, so dass dann der Trolley 14 mittels der Kette 38 über seine Rollen 22 nach der einen oder der anderen Seite des Trailerzuganhängers 10 ausgefahren werden kann.

Der Kettentrieb hat auf jeder Seite zwei nicht gezeigte Sensoren, beispielsweise Lichtschranken, mit denen die Parallelität des Trolleys 14 geprüft werden kann. Wenn diese festgestellt wurde, wird ein Freigabesignal für den Kettenantrieb erzeugt, wodurch sichergestellt ist, dass die beiden Ketten 38 den Trolley 14 in korrekter, nicht verkanteter Lage auf das Traggestell 12 aufziehen.

## Patentansprüche

1. Trailerzuganhänger mit einem Traggestell (12) für die Aufnahme mindestens eines in einem Trailerzug mitgeführten Transportgutwagens oder Trolleys (14) mit Lenk- und/oder Bockrollen (22), wobei das Traggestell (12) ein mittig angeordnetes Fahrwerk (24) mit einer Achse (26) und zwei seitlich an dieser gelagerten Rädern (28) hat und in Fahrtrichtung (f) vor und hinter dem Fahrwerk (24) Mittel für die Aufnahme des Transportgutwagens (14) vorgesehen sind,
**dadurch gekennzeichnet,**
**dass** die Mittel zur Aufnahme des Transportgutwagens (14) aus quer zur Fahrtrichtung (f) verlaufenden Auffahr- und Ablauframpen (42) für die Abstützung der Lenk- und/oder Bockrollen (22) des Trolleys (14) bestehen.

2. Trailerzuganhänger nach Anspruch 1.
**dadurch gekennzeichnet,**
**dass** die beiden Rampen (42) in einer zur Achse (26) parallelen Ebene ein segmentbogenförmiges Querschnittsprofil haben.

3. Trailerzuganhänger nach Anspruch 1 oder 2,
**dadurch gekennzeichnet,**
**dass** die bogenförmigen Rampen (42) von jeweils einer zur Achse (42) parallelen Seitenwand (34) eines das Fahrwerk (24) überdeckende, nach unten offenen Gehäuses (30) abstehen, das ein die beiden vertikalen Seitenwände (34) verbindendes Dach (32) hat, zwischen dem und der Achse (26) des Fahrwerks (24) eine Hubeinrichtung (50) zur Höhenverstellung des Traggestells (12) angeordnet ist.

4. Trailerzuganhänger nach Anspruch 3,
**dadurch gekennzeichnet,**
**dass** an den beiden seitlichen Enden (58) des Gehäuses (30) quer zur Fahrtrichtung (f) höhenverstellbare Mittel (60) zur Verriegelung des Transportgutwagens (14) angeordnet sind.

5. Trailerzuganhänger nach Anspruch 4,
**dadurch gekennzeichnet,**
**dass** die Mittel (60) zur Verriegelung an jedem der beiden seitlichen Enden (58) des Gehäuses (30) aus zwei um eine feste Drehachse (62) schwenkbaren Sperrklinken (64) bestehen, die an den seitlichen Enden (58) in Fahrtrichtung (f) einander gegenüberliegen, wobei neben einer der beiden Sperrklinken (64) eine dazu parallele Schaltklinke (66) auf der Drehachse (62) relativ zu der Sperrklinke (64) längsverschieblich gelagert und über eine Zugstange (68) mit der am anderen Ende (58) gegenüberliegenden Sperrklinke (64) in Wirkverbindung ist.

6. Trailerzuganhänger nach Anspruch 5,
**dadurch gekennzeichnet,**
**dass** neben der anderen der beiden Sperrklinken (64) eine zu dieser parallele Riegelklinke (166) auf der Drehachse (62) relativ zur Sperrklinke (64) gegen die Kraft einer Zugfeder (106) längsverschieblich gelagert ist.

7. Trailerzuganhänger nach Anspruch 6,
**dadurch gekennzeichnet,**
**dass** die Schaltklinken (66) und die Riegelklinken (166) je ein Langloch (70) haben, das auf der Drehachse (62) verschiebbar gelagert ist, während ein von der daneben angeordneten Sperrklinke (64) abstehender Zapfen (74) in eine als Führungsschlitz wirkende Langlochbohrung (76) der zugeordneten Schaltklinke (66) bzw. Riegelklinke (166) eingreift.

8. Trailerzuganhänger nach einem der Ansprüche 5 bis 7,
**dadurch gekennzeichnet,**
**dass** jede der beiden Zugstangen (68) mit einem Ende über eine Gelenkkoppel (86) an einer Schaltklinke (66) angelenkt ist, während ihr gegenüberliegendes, freies Ende (84) in der Verriegelungsstellung durch die Kraft einer Feder (78) formschlüssig in einen Sitz (80) der zugeordneten Sperrklinke (64) eingreift.

9. Trailerzuganhänger nach einem der Ansprüche 4 bis 8,
**dadurch gekennzeichnet,**
**dass** jeder Schaltklinke (66) und jeder Riegelklinke (166) eine im Gehäuse (30) befestigte Kulissenplatte (94; 96) mit einem winkelförmigen Führungsschlitz (98; 100), bestehend aus einem nach unten gerichteten Abschnitt und einem horizontalen, zum seitlichen Ende (58) hin abgewinkelten Abschnitt zugeordnet ist, in den ein Zapfen (102) eingreift, der von der benachbarten Schaltklinke (66) bzw. Riegelklinke (166) absteht.

10. Trailerzuganhänger nach einem der vorhergehenden Ansprüche.
**dadurch gekennzeichnet,**
**dass** jeder Auffahr- und Ablauframpe (42) an ihren vom Fahrwerk (24) wegweisenden und zu diesem parallelen, freien Rand (52) eine Führungsschiene (54) angebracht ist.

11. Trailerzuganhänger nach Anspruch 10,
**dadurch gekennzeichnet,**
**dass** jede Führungsschiene (54) in Richtung auf ihr freies Ende (56) zur Bildung einer Einführungsschräge divergiert.

12. Trailerzuganhänger nach einem der vorhergehenden Ansprüche,
**dadurch gekennzeichnet,**
**dass** die Mittel zur Aufnahme des Transportgutwagens (14) eine quer zur Fahrtrichtung (f) bewegliche Greifeinheit (47) mit zwei umlaufenden Ketten (38) mit einem zur Längsmittelachse des Trailerzuganhängers (10) ansteigenden und nach dieser abfallenden Zugtrum (40) aufweisen, wobei der dachförmige Verlauf des Zugtrums (40) jeder Kette (38) der Bogenform der unterhalb der Kette (38) angebrachten Rampe (42) entspricht.

13. Trailerzuganhänger nach Anspruch 12,
**dadurch gekennzeichnet,**
**dass** von der Kette (38) Greiffinger (46) zum Erfassen und Halten eines Rahmenteils (18) des Trolleys (14) abstehen.

14. Trailerzuganhänger nach Anspruch 13,
**dadurch gekennzeichnet,**
**dass** an den Seitenwänden (34) des Gehäuses (30) Antriebs- und Umlenkrollen (36) für das dachförmige Zugtrum (40) der Kette (38) gelagert sind.

15. Trailerzuganhänger nach einem der vorhergehenden Ansprüche,
**dadurch gekennzeichnet,**
**dass** am in Fahrtrichtung (f) vorderen und hinteren Ende der Rampen (42) ein Zugmaul (44) für die Koppelung mit einem weiteren Trailerzuganhänger (10) oder einem Zugfahrzeug angebracht ist.

## Claims

1. Trailer-train trailer having a carrying framework (12) for accommodating at least one transport cart or trolley (14) which has swivel and/or fixed castors (22) and is carried along in a trailer train, wherein the carrying framework (12) has a centrally arranged chassis (24) with an axle (26) and two wheels (28), which are mounted laterally on said axle, and means for accommodating the transport cart (14) are provided upstream and downstream of the chassis (24) as seen in the direction of travel (f),
**characterized in that**
the means for accommodating the transport cart (14) comprise run-on and run-off ramps (42) for supporting the swivel and/or fixed casters (22) of the trolley (14), said ramps running transversely to the direction of travel (f).

2. Trailer-train trailer according to Claim 1,
**characterized in that**,
in a plane parallel to the axle (26), the two ramps (42) have a segmental-arch-shaped cross-sectional profile.

3. Trailer-train trailer according to Claim 1 or 2,
**characterized**
**in that** the curved ramps (42) project from a respective side wall (34), parallel to the axle (42), of a housing (30) which covers the chassis (24), is open in the downward direction and has a roof (32) connecting the two vertical side walls (34), a lifting device (50) for adjusting the height of the carrying framework (12) being arranged between the roof and the axle (26) of the chassis (24).

4. Trailer-train trailer according to Claim 3,
**characterized**
**by** the arrangement of height-adjustable means (60) for locking the transport cart (14), in a direction transverse to the direction of travel (f), at the two lateral ends (58) of the housing (30).

5. Trailer-train trailer according to Claim 4,
**characterized**
**in that** the locking means (60) at each of the two lateral ends (58) of the housing (30) comprise two pawls (64) which can be pivoted about a fixed rotary pin (62) and are located opposite one another at the lateral ends (58) in the direction of travel (f), wherein, alongside one of the two pawls (64), a parallel latch (66) is mounted on the rotary pin (62) for longitudinal displacement relative to the pawl (64) and is in operative connection, via a connecting rod (68), with the pawl (64), located at the other end (58).

6. Trailer-train trailer according to Claim 5,
**characterized**
**in that**, alongside the other of the two pawls (64), a parallel catch (166) is mounted on the rotary pin (62) for a longitudinal displacement relative to the pawl (64) counter to the force of a tension spring (106).

7. Trailer-train trailer according to Claim 6,
**characterized**
**in that** the latches (66) and the catches (166) each have a slot (70) which is mounted for displacement on the rotary pin (62), while a stub (74) projecting from the pawl (64) arranged alongside it engages in a slot-type bore (76) in the associated latch (66) or catch (166), said bore acting as a guide slot.

8. Trailer-train trailer according to one of Claims 5 to 7,
**characterized**
**in that** each of the two connecting rods (68) has one end articulated on a latch (66) via a joint coupling (86), while its opposite, free end (84), in the locking position, engages in a form-fitting manner in a seat (80) of the associated pawl (64) under the force of a spring (78).

9. Trailer-train trailer according to one of Claims 4 to 8,
**characterized**
**in that** each latch (66) and each catch (166) is assigned a slotted plate (94; 96), which is fastened in the housing (30) and has an angled guide slot (98; 100) comprising a downwardly directed portion and a horizontal portion angled in the direction of the lateral end (58), a stub (102) which projects from the adjacent latch (66) or catch (166) engaging in said guide slot.

10. Trailer-train trailer according to one of the preceding claims,
**characterized**
**in that** a guide rail (54) is fitted on each run-on and run-off ramp (42), on the free periphery (52) of the latter which is oriented away from the chassis (24) and is parallel thereto.

11. Trailer-train trailer according to Claim 10,
**characterized**
**in that** each guide rail (54) diverges in the direction of its free end (56) to form an introduction slope.

12. Trailer-train trailer according to one of the preceding claims
**characterized**
**in that** the means for accommodating the transport cart (14) has a gripping unit (47) which can be moved transversely to the direction of travel (f) and has two circulating chains (38) with a pulling strand (40) which ascends towards the longitudinal centre axis of the trailer-train trailer (10) and descends following the latter, wherein the roof-like progression of the pulling strand (40) of each chain (38) corresponds to the curved shape of the ramp (42) fitted beneath the chain (38).

13. Trailer-train trailer according to Claim 12,
**characterized**
**in that** gripping fingers (48) for gripping and retaining a frame part (18) of the trolley (14) project from the chain (38).

14. Trailer-train trailer according to Claim 13,
**characterized**
**in that** driving and deflecting rollers (36) for the roof-like pulling strand (40) of the chain (38) are mounted on the side walls (34) of the housing (30).

15. Trailer-train trailer according to one of the preceding claims,
**characterized**
**in that** a towbar jaw (44) for coupling to a further trailer-train trailer (10) or to a towing vehicle is fitted at the front and rear ends of the ramps (42) as seen in the direction of travel (f).

## Revendications

1. Remorque de train de remorque avec un bâti de support (12) destiné à recevoir au moins un chariot de produits à transporter ou un chariot (14) emporté dans un train de remorque avec des roues directrices et/ou des roues fixes (22), dans laquelle le bâti de support (12) présente un train de roulement (24) disposé au milieu avec un essieu (26) et deux roues (28) montées latéralement sur celui-ci et il est prévu devant et derrière l'essieu (24) dans la direction de roulage (f) des moyens destinés à recevoir le chariot de produits à transporter (14), **caractérisée en ce que** les moyens destinés à recevoir le chariot de produits à transporter (14) se composent de rampes de montée et de descente (42) s'étendant transversalement à la direction de roulage (f) pour le support des roues directrices et/ou des roues fixes (22) du chariot (14).

2. Remorque de train de remorque selon la revendication 1, **caractérisée en ce que** les deux rampes (42) présentent, dans un plan parallèle à l'essieu (26), un profil de section transversale en forme d'arc segmenté.

3. Remorque de train de remorque selon la revendication 1 ou 2, **caractérisée en ce que** les rampes en forme d'arc (42) sont saillantes respectivement à partir d'une paroi latérale (34) parallèle à l'essieu (42) d'un caisson (30) recouvrant le train de roulement (24) et ouvert vers le bas, qui comporte un toit (32) reliant les deux parois verticales (34), entre lequel et l'essieu (26) du train de roulement (24) est disposé un dispositif de levage (50) pour le réglage en hauteur du bâti de support (12).

4. Remorque de train de remorque selon la revendication 3, **caractérisée en ce que** des moyens réglables en hauteur (60) pour le verrouillage du chariot de produits à transporter (14) sont disposés aux deux extrémités latérales (58) du caisson (30) transversalement à la direction de roulage (f).

5. Remorque de train de remorque selon la revendication 4, **caractérisée en ce que** les moyens (60) pour le verrouillage à chacune des deux extrémités latérales (58) du caisson (30) se composent de deux cliquets de blocage (64) pouvant pivoter autour d'un axe de rotation fixe (62), qui se font mutuellement face aux extrémités latérales (58) dans la direction de roulage (f), dans laquelle en plus d'un des deux cliquets de blocage (64) un cliquet de commutation (66) parallèle à celui-ci est monté sur l'axe de rotation (62) de façon déplaçable longitudinalement par rapport au cliquet de blocage (64) et est en liaison active avec le cliquet de blocage opposé (64) à l'autre extrémité (58) au moyen d'un tirant (68).

6. Remorque de train de remorque selon la revendication 5, **caractérisée en ce qu'**en plus de l'autre des deux cliquets de blocage (64) un cliquet de verrouillage (166) parallèle à celui-ci est monté sur l'axe de rotation (62) de façon déplaçable en direction longitudinale par rapport au cliquet de blocage (64) contre la force d'un ressort de traction (108).

7. Remorque de train de remorque selon la revendication 6, **caractérisée en ce que** les cliquets de commutation (66) et les cliquets de verrouillage (166) présentent chacun un trou oblong (70), qui est agencé de façon déplaçable sur l'axe de rotation (62), tandis qu'un tourillon (74) saillant sur le cliquet de blocage (64) disposé à côté de celui-ci s'engage dans un forage de trou oblong (76) agissant comme fente de guidage du cliquet de commutation (66) ou du cliquet de verrouillage (166) associé.

8. Remorque de train de remorque selon l'une quelconque des revendications 5 à 7, **caractérisée en ce que** chacun des deux tirants (68) est articulé à une extrémité par un coupage articulé (86) à un cliquet de commutation (66), tandis que son extrémité libre opposée (84) s'engage dans la position de verrouillage par emboîtement dans un siège (80) du cliquet de blocage associé (64) par la force d'un ressort (78).

9. Remorque de train de remorque selon l'une quelconque des revendications 4 à 8, **caractérisée en ce qu'**à chaque cliquet de commutation (66) et à chaque cliquet de verrouillage (166) est associée une plaque à coulisse (94; 96) fixée au caisson (30) avec une fente de guidage en forme d'angle (98; 100), se composant d'une partie orientée vers le bas et d'une partie horizontale coudée vers l'extrémité latérale (58), dans laquelle s'engage un tourillon (102), qui est en saillie sur le cliquet de commutation (66) ou le cliquet de verrouillage (166) voisin.

10. Remorque de train de remorque selon l'une quelconque des revendications précédentes, **caractérisée en ce qu'**un rail de guidage (54) est installé sur chaque rampe de montée et de descente (42) sur son bord libre (52) s'éloignant du train de roulement (24) et parallèle à celui-ci.

11. Remorque de train de remorque selon la revendication 10, **caractérisée en ce que** chaque rail de guidage (54) diverge en direction de son extrémité libre (56) pour former une pente d'introduction.

12. Remorque de train de remorque selon l'une quelconque des revendications précédentes, **caractérisée en ce que** les moyens destinés à recevoir le chariot de produits à transporter (14) présentent une unité de pince (47) mobile transversalement à la direction de roulage (f) avec deux chaînes tournantes (38) avec un brin de traction (40) montant vers l'axe central longitudinal de la remorque de train de remorque (10) et descendant après celui-ci, dans laquelle l'allure en forme de chevron du brin de traction (40) de chaque chaîne (38) correspond à la forme d'arc de la rampe (42) installée en dessous de la chaîne (38).

13. Remorque de train de remorque selon la revendication 12, **caractérisée en ce que** des doigts de saisie (46) sont saillants sur la chaîne (38) pour saisir et maintenir une partie du châssis (18) du chariot (14).

14. Remorque de train de remorque selon la revendication 13, **caractérisée en ce que** des roues d'entraînement et de renvoi (36) pour le brin de traction en forme de chevron (40) de la chaîne (38) sont montées sur les parois latérales (34) du caisson (30).

15. Remorque de train de remorque selon l'une quelconque des revendications précédentes, **caractérisée en ce qu'**une chape d'attelage (44) est installée à l'extrémité avant et arrière des rampes (42) dans la direction de roulage (f) pour l'attelage à une autre remorque de train de remorque (10) ou à un véhicule de traction.
